# EUROPÄISCHE PATENTANMELDUNG

(11) **EP 4 321 951 A1**
(43) Veröffentlichungstag der Anmeldung: **14.02.2024**
(21) Anmeldenummer: 23189633.3
(22) Anmeldetag: 04.08.2023
(51) Int. Cl.: G05B 19/418, G07C 3/14

(54) **VERFAHREN ZUR AUTOMATISIERTEN FEHLERHANDHABUNG EINER PRODUKTIONSANLAGE UND PRODUKTIONSANLAGE**

(30) Priorität: 08.08.2022 DE 102022119867
(71) Anmelder: SOMIC Verpackungsmaschinen GmbH & Co. KG, 83123 Amerang (DE)
(72) Erfinder: Kögel, Christoph, 83128 Prutting (DE)
(74) Vertreter: Weickmann & Weickmann PartmbB

(57) **Zusammenfassung**

Die vorliegende Erfindung betrifft ein Verfahren mit den Schritten Bereitstellen einer Mehrzahl von Bilderfassungseinheiten (K1, K2, K3) und einer Mehrzahl von Fehlererfassungseinheiten (30) an einer Produktionsanlage (10), wobei die Produktionsanlage (10) eine Mehrzahl von Arbeitszonen (A1, A2, A3) umfasst, welchen jeweils wenigstens eine der Bilderfassungseinheiten (K1, K2, K3) und wenigstens eine der Fehlererfassungseinheiten (30) zugeordnet ist, Bereitstellen einer Steuereinheit, welche dazu eingerichtet ist, ein Signal wenigstens einer Fehlererfassungseinheit (30) zu erfassen und darauf basierend zu detektieren, ob in der Arbeitszone (A1, A2, A3), welcher die Fehlererfassungseinheit (30) zugeordnet ist, ein Fehler in der Produktionsanlage (10) aufgetreten ist, und in dem Fall, dass in einer Arbeitszone (A1, A2, A3) ein Fehler detektiert worden ist, Weiterleiten von Bilddaten, welche von der wenigstens einen Bilderfassungseinheit (K1, K2, K3, K4) dieser Arbeitszone (A1, A2, A3) erfasst werden und/oder worden sind, an einen Benutzer unter Verwendung einer Ausgabeeinheit (28). Ferner betrifft die Erfindung eine solche Produktionsanlage (10).

## Beschreibung

Die vorliegende Erfindung betrifft ein Verfahren zur automatisierten Fehlerhandhabung einer Produktionsanlage und eine entsprechende Produktionsanlage.

Allgemein sind Produktionsanlagen bekannt, bei welchen das Auftreten von Fehlern durch geeignete Einrichtungen detektiert werden kann und somit die Produktionsanlage beispielsweise umgehend gestoppt werden kann. Jedoch hat es sich gezeigt, dass bei einem aufgetretenen Fehler ein erheblicher Zeitaufwand für die Fehleranalyse aufgewendet werden muss, um rückwirkend nachzustellen, unter welchen Umständen und aufgrund welcher Ursache ein jeweiliger Fehler aufgetreten ist.

Es ist daher die Aufgabe der vorliegenden Erfindung, ein Verfahren zur automatisierten Fehlerhandhabung einer Produktionsanlage bzw. eine entsprechend eingerichtete Produktionsanlage bereitzustellen, um die Fehleranalyse als auch eine darauf basierende Optimierung der Produktionsanlage zu vereinfachen.

In einem ersten Aspekt wird diese Aufgabe gemäß der vorliegenden Erfindung durch ein Verfahren zur automatisierten Fehlerhandhabung einer Produktionsanlage gelöst, umfassend die folgenden Schritte:
- Bereitstellen einer Mehrzahl von Bilderfassungseinheiten und einer Mehrzahl von Fehlererfassungseinheiten an einer Produktionsanlage, wobei die Produktionsanlage eine Mehrzahl von Arbeitszonen umfasst, welchen jeweils wenigstens eine der Bilderfassungseinheiten und wenigstens eine der Fehlererfassungseinheiten zugeordnet ist,
- Bereitstellen einer Steuereinheit, welche dazu eingerichtet ist, ein Signal wenigstens einer Fehlererfassungseinheit zu erfassen und darauf basierend zu detektieren, ob in der Arbeitszone, welcher die Fehlererfassungseinheit zugeordnet ist, ein Fehler in der Produktionsanlage aufgetreten ist, und
- in dem Fall, dass in einer Arbeitszone ein Fehler detektiert worden ist, Weiterleiten von Bilddaten, welche von der wenigstens einen Bilderfassungseinheit dieser Arbeitszone erfasst werden und/oder worden sind, an einen Benutzer unter Verwendung einer Ausgabeeinheit.

Auf diese Weise kann ein Benutzer, wie beispielsweise ein Entwickler der Produktionsanlage oder ein Servicemitarbeiter, automatisiert diejenigen Bilddaten bereitgestellt bekommen, welche die Arbeitszone zeigen, in welcher der Fehler detektiert worden ist. Damit kann ein Nachstellen und rückwirkendes Analysieren des Fehlers deutlich reduziert werden oder sogar gänzlich entfallen, da die Fehleranalyse auf Grundlage der bereitgestellten Bilddaten erfolgen kann. Insbesondere kann auf ein Signal der Fehlererfassungseinheit hin, dass ein Fehler detektiert worden ist, ein mit den Bilddaten korrelierender Zeitstempel erzeugt werden, welcher anzeigt, zu welchem Zeitpunkt in den aufgenommenen Bilddaten der Fehler aufgetreten ist.

Eine Bilderfassungseinheit kann beispielsweise eine Kamera umfassen. Die Kamera kann insbesondere dazu eingerichtet sein, Licht im für Menschen sichtbaren Spektrum und/oder außerhalb dieses Spektrums, zum Beispiel im Bereich von Röntgenstrahlung, zu erfassen und darauf basierend Bilddaten zu erzeugen. Für den Fall, dass einer Arbeitszone mehr als eine Bilderfassungseinheit zugeordnet ist, können die durch die jeweilige Bilderfassungseinheit erzeugten Bilddaten getrennt und/oder kombiniert, zum Beispiel als sogenannte "Bild-in-Bild"-Bilddaten, an den Benutzer über die Ausgabeeinheit bereitgestellt werden.

Vorteilhafterweise können die Bilddaten einer jeweiligen Bilderfassungseinheit in einem Ringspeicher gespeichert werden, wobei Bilddaten, nach Ablauf einer vorbestimmten Zeitperiode, durch neue Bilddaten überschrieben werden. Durch das Verwenden eines Ringspeichers kann gewährleistet werden, dass Bilddaten auch für die Vergangenheit, das heißt für eine vorbestimmte Zeitperiode vor dem Auftreten eines Fehlers, zur Verfügung stehen. Insbesondere in Produktionsanlagen mit einem hohen Durchsatz an gleichen Produktionsgütern kann bestimmt werden, dass Ursachen, welche zu einem Fehler in der Produktionsanlage führen, üblicherweise nicht weiter zurückliegen als eine vorbestimmte Zeitperiode, so dass entsprechend ältere Bilddaten für die Fehleranalyse unberücksichtigt bleiben können.

Aus diesem Grund kann die vorbestimmte Zeitperiode höchstens 1 Stunde, insbesondere höchstens 15 Minuten, vorteilhafterweise in etwa 5 Minuten, betragen.

In diesem Zusammenhang können die Bilddaten, welche im Fehlerfall automatisiert über die Ausgabeeinheit an den Benutzer bereitgestellt werden, Bilddaten umfassen, welche um bis zu der Höhe der vorbestimmten Zeitperiode vor dem Zeitpunkt aufgenommen worden sind, zu welchem der Fehler in der Arbeitszone detektiert worden ist. Bezogen auf die voranstehend erwähnten beispielhaften Werte für die vorbestimmte Zeitperiode kann es somit möglich sein, Bilddaten zu analysieren, welche um bis zu 1 Stunde, insbesondere um bis zu 15 Minuten, vorteilhafterweise um bis zu 5 Minuten, vor dem Auftreten eines Fehlers aufgenommen worden sind. Darauf basierend kann das Zustandekommen eines Fehlers bereits in einem Anfangsstadium analysiert werden und somit die Ursache eines Fehlers vereinfacht gefunden werden.

Dabei können die Bilddaten, welche im Fehlerfall automatisiert über die Ausgabeeinheit an den Benutzer bereitgestellt werden, Bilddaten umfassen, welche 0,3 min bis 1,5 min, insbesondere 0,5 min, vor dem Zeitpunkt aufgenommen worden sind, zu welchem der Fehler in der Arbeitszone detektiert worden ist, wobei, auf eine Eingabe eines Benutzers hin, Bilddaten an die Ausgabeeinheit bereitgestellt werden, welche um mehr als 0,3 min bis 1,5 min, insbesondere um mehr als 0,5 min, vor dem Zeitpunkt aufgenommen worden sind, zu welchem der Fehler in der Arbeitszone detektiert worden ist. In anderen Worten kann das Verfahren so eingerichtet sein, dass zwar gespeicherte Bilddaten vorhanden sind, welche um mehr als 0,3 min bis 1,5 min, insbesondere 0,5 min, vor dem Zeitpunkt aufgenommen worden sind, zu welchem der Fehler in der Arbeitszone detektiert worden ist, dass jedoch mit dem Schritt des automatisierten Bereitstellens der Bilddaten im Fehlerfall lediglich Bilddaten an die Ausgabeeinheit bereitgestellt werden, welche bereits 0,3 min oder mehr, vorteilhafterweise bis zu 1,5 min, insbesondere 0,5 min, vor dem Zeitpunkt aufgenommen worden sind, zu welchem der Fehler in der Arbeitszone detektiert worden ist. Der Hintergrund hierfür ist, dass es sich gezeigt hat, dass in den meisten Fehlerfällen eine rückschauende Analyse von etwa 0,3 min bis 1,5 min, insbesondere von 0,5 min, vor dem Fehlerfall ausreichend ist, um die Ursache des Fehlers ermitteln zu können. Lediglich in einer geringen Anzahl von Fehlern kann es notwendig sein, Bilddaten zu analysieren, welche um mehr als 0,3 min bis 1,5 min, insbesondere um mehr als 0,5 min, vor dem Fehlerfall aufgenommen worden sind. Hierdurch kann ein Analyseaufwand weiter reduziert werden.

Der Benutzer kann beispielsweise an der Ausgabeeinheit selbst eine Eingabe tätigen, mit welcher er Bilddaten anfordert, welche um mehr als 0,3 min bis 1,5 min, insbesondere um mehr als 0,5 min, vor dem Zeitpunkt aufgenommen worden sind, zu welchem der Fehler in der Arbeitszone detektiert worden ist. Hierfür kann es sowohl denkbar sein, dass einer solchen Anforderung durch einen Benutzer eine feste vorbestimmte Zeitperiode zugewiesen ist, um welche Bilddaten vor dem Fehlerfall bereitgestellt werden, z.B. 10 Minuten, als auch, dass es dem Benutzer ermöglicht ist, mit seiner Anforderung die vorbestimmte Zeitperiode einzustellen, z.B. von 1 Minute bis zu 1 Stunde in Minutenschritten.

In vorteilhaften Weiterbildungen der vorliegenden Erfindung kann zusammen mit den Bilddaten, welche über die Ausgabeeinheit an den Benutzer bereitgestellt werden, auch eine Identifikation der Arbeitszone bereitgestellt werden, in welcher der Fehler aufgetreten ist. Auf diese Weise kann der Benutzer sehr schnell erkennen, in welcher Arbeitszone der Fehler aufgetreten ist. Die Identifikation der Arbeitszone kann wenigstens einen Buchstaben und/oder wenigstens eine Ziffer umfassen, welcher/welche die Arbeitszone eindeutig identifizieren/identifiziert.

Insbesondere kann jeder Bilderfassungseinheit und jeder Arbeitszone eine eineindeutige Kennung zugewiesen werden und die Kennung der Arbeitszone, in welcher der Fehler aufgetreten ist, und die Kennung jeder dieser Arbeitszone zugeordneten Bilderfassungseinheit können an den Benutzer über die Ausgabeeinheit bereitgestellt werden. Als Beispiel kann eine entsprechende Information, welche an den Benutzer über die Ausgabeeinheit bereitgestellt wird, als mehrstellige Kennziffer ausgeführt sein, welche (beispielsweise vier) Kennziffern der entsprechenden Arbeitszone und (beispielsweise drei) Kennziffern der Kamera, von welcher die bereitgestellten Bilddaten aufgenommen worden sind, umfasst.

Ferner können die Bilddaten, welche im Fehlerfall über die Ausgabeeinheit an den Benutzer bereitgestellt werden, automatisiert in eine Speichereinheit übermittelt werden, aus welcher die Bilddaten dauerhaft abrufbar sind. Das heißt, jedes Mal, wenn ein Fehler in der Produktionsanlage detektiert worden ist, können die entsprechenden Bilddaten in eine dauerhafte Speichereinheit gespeichert werden, so dass eine Datenbank von Fehlern mit zugehörigen Bilddaten erzeugt werden kann. Die Bilddaten können beim Auslagern in die dauerhafte Speichereinheit Bilddaten umfassen, welche um eine vorbestimmte Zeitperiode, beispielsweise 5 Minuten, insbesondere die maximal zur Verfügung stehende Zeitperiode, vor dem Auftreten des Fehlers aufgenommen worden sind. Die Bilddaten können die oben erwähnten zusätzlichen Informationen, wie eine Identifikation der Arbeitszone und/oder eine Identifikation der Bilderfassungseinheit, welche die Bilddaten erzeugt hat, und/oder eine Identifikation der Fehlererfassungseinheit, welche den Fehler in der Produktionsanlage detektiert hat, umfassen.

Der Steuereinheit kann eine Datenbank zugeordnet sein, in welcher vordefinierte Fehlertexte gespeichert sind, wobei die vordefinierten Fehlertexte wenigstens einem Fehlertyp, insbesondere einer Kombination aus Fehlererfassungseinheit und Arbeitszone, zugeordnet sind. Hierdurch kann es einem Benutzer erleichtert werden, zu erkennen, welcher Fehler in welcher Arbeitszone aufgetreten ist.

In einem Beispiel kann einer bestimmten Arbeitszone eine Kennziffer "0403" zugewiesen werden, wobei der Arbeitszone bzw. der Kennziffer "0403" der beschreibende Text "Portal Verdeckelkopf" zugewiesen sein kann. Tritt nun weiter beispielhaft ein Fehler auf, bei welchem ein entsprechendes Drehmoment, welches in der Arbeitszone auf ein Produktionsgut ausgeübt wird, nicht einem vorbestimmten Drehmoment entspricht, so kann diesem Fehler die Kennziffer "056" und/oder der Fehlertext "Drehmoment Horizontal" zugewiesen werden. Die voranstehenden Informationen können bei der Ausgabe der Bilddaten an die Ausgabeeinheit im Fehlerfall kombiniert ausgegeben werden, wie beispielsweise als "Drehmoment Portal Verdeckelkopf Horizontal 0403056".

Ferner sei hier erwähnt, dass die Software, welche zum Ausführen des erfindungsgemäßen Verfahrens eingerichtet ist, eine entsprechende Datenschnittstelle zu einer allgemeinen Produktionsanlagen-Software und/oder zu einer Bedienungssoftware der Produktionsanlage haben kann. Alternativ kann die Software zum Ausführen des erfindungsgemäßen Verfahrens auch als Teil der Bedienungssoftware der Produktionsanlage in diese integriert sein.

In einem weiteren Aspekt wird die eingangs erwähnte Aufgabe gemäß der vorliegenden Erfindung durch eine Produktionsanlage gelöst, welche dazu eingerichtet ist, Fehler automatisiert, insbesondere unter Verwendung des erfindungsgemäßen Verfahrens, zu handhaben, umfassend
- eine Mehrzahl von Bilderfassungseinheiten und eine Mehrzahl von Fehlererfassungseinheiten, wobei die Produktionsanlage eine Mehrzahl von Arbeitszonen umfasst, welchen jeweils wenigstens eine der Bilderfassungseinheiten und wenigstens eine der Fehlererfassungseinheiten zugeordnet ist,
- eine Steuereinheit, welche dazu eingerichtet ist, ein Signal wenigstens einer Fehlererfassungseinheit zu erfassen und darauf basierend zu detektieren, ob in der Arbeitszone, welcher die Fehlererfassungseinheit zugeordnet ist, ein Fehler in der Produktionsanlage aufgetreten ist, und
- wobei die Steuereinheit ferner dazu eingerichtet ist, in dem Fall, dass in einer Arbeitszone ein Fehler detektiert worden ist, Bilddaten, welche von der wenigstens einen Bilderfassungseinheit dieser Arbeitszone erfasst werden und/oder worden sind, an einen Benutzer unter Verwendung einer Ausgabeeinheit weiterzuleiten.

Es sei bereits an dieser Stelle darauf hingewiesen, dass sämtliche in Bezug auf das erfindungsgemäße Verfahren erwähnten Merkmale, Effekte und Vorteile auch auf die erfindungsgemäße Produktionsanlage anwendbar sein können, und umgekehrt.

Beispielsweise kann die Ausgabeeinheit an der Produktionsanlage bereitgestellt sein. Alternativ oder zusätzlich ist es natürlich denkbar, dass die Bilddaten und/oder die weiteren Informationen an eine entfernt angeordnete Ausgabeeinheit, wie beispielsweise einen Computer mit Bildschirm und Eingabegerät oder ein Tablet, übermittelt werden.

Die Ausgabeeinheit kann ferner dazu eingerichtet sein, Benutzereingaben zu empfangen, wobei insbesondere die Ausgabeeinheit als Touch-Screen ausgebildet ist. Somit kann ein Benutzer direkt an der Ausgabeeinheit Eingaben vornehmen, wie beispielsweise Bilddaten mit früherem Aufnahmezeitpunkt und/oder Bilddaten einer anderen Bilderfassungseinheit bzw. einer anderen Arbeitszone anzufordern.

Gemäß vorteilhaften Weiterbildungen der vorliegenden Erfindung kann die Produktionsanlage Funktionseinheiten umfassen, welche miteinander mechanisch und/oder elektrisch verbindbar sind, wobei jede Funktionseinheit genau eine Arbeitszone aufweist. Die einzelnen Funktionseinheiten können insbesondere zueinander standardisierte Schnittstellen aufweisen, so dass eine Produktionsanlage baukastenartig durch das Zusammenstellen einer Mehrzahl von Funktionseinheiten gebildet werden kann.

Dabei kann jede Funktionseinheit mit einer eineindeutigen Kennung versehen sein, wobei die Kennung derjenigen Funktionseinheit, in welcher ein Fehler detektiert worden ist, zusammen mit den Bilddaten an den Benutzer über die Ausgabeeinheit ausgegeben wird. Mit Bezug auf das bereits weiter oben erwähnte Beispiel, kann einer bestimmten Funktionseinheit mit der Arbeitszone "Portal Verdeckelkopf" die Kennziffer "0403" zugewiesen sein.

Eine Bilderfassungseinheit kann dazu eingerichtet sein, Bilddaten über lediglich die Funktionseinheit bzw. eine dieser Funktionseinheit zugeordnete Arbeitszone zu erfassen, oder kann dazu eingerichtet sein, auch Bilddaten einer benachbarten Funktionseinheit bzw. von wenigstens einer benachbarten Arbeitszone zu erfassen. In diesem Zusammenhang sei darauf hingewiesen, dass eine Bilderfassungseinheit, welche einer Arbeitszone einer Funktionseinheit zugeordnet ist, nicht zwangsläufig an derselben Funktionseinheit angeordnet sein muss, sondern auch davon getrennt angebracht sein kann, beispielsweise an einer benachbarten Funktionseinheit der Produktionsanlage.

Eine Fehlererfassungseinheit kann wenigstens eines aus einer Lichtschranke, einem Drucksensor, einer Stromerfassungseinheit und einer Magnetfeldeinheit umfassen. Eine Stromerfassungseinheit kann beispielsweise dazu eingerichtet sein, eine Stromstärke und/oder eine Spannung zu erfassen, welche an eine Arbeitszone geliefert werden/wird bzw. welche von Elementen der Arbeitszone verbraucht werden/wird. Hierüber kann zum Beispiel auf ein Drehmoment rückgeschlossen werden, welches aktuell von einem entsprechenden Element der Arbeitszone auf ein Produktionsgut aufgebracht wird. In dem Fall, dass das aktuell erfasste Drehmoment von einem vorbestimmten Drehmoment abweicht, kann von der Fehlererfassungseinheit eine Fehlerdetektion ausgegeben werden. Eine Magnetfeldeinheit kann zum Beispiel dazu eingerichtet sein, Änderungen in einem Magnetfeld zu detektieren und so insbesondere die Anwesenheit/Abwesenheit von magnetisierbaren Materialien bestimmten, welche gegebenenfalls ungewünscht in Produktionsgüter eingebracht worden sind.

Im Folgenden wird die vorliegende Erfindung anhand eines Ausführungsbeispiels in größerem Detail anhand der begleitenden Zeichnungen beschrieben werden. Es stellt dar:
- Figur 1: eine erfindungsgemäße Produktionsanlage mit schematisch eingezeichneten Arbeitselementen; und
- Figur 2: eine schematische Ansicht von Datenschnittstellen einer beispielhaften Produktionsanlage.

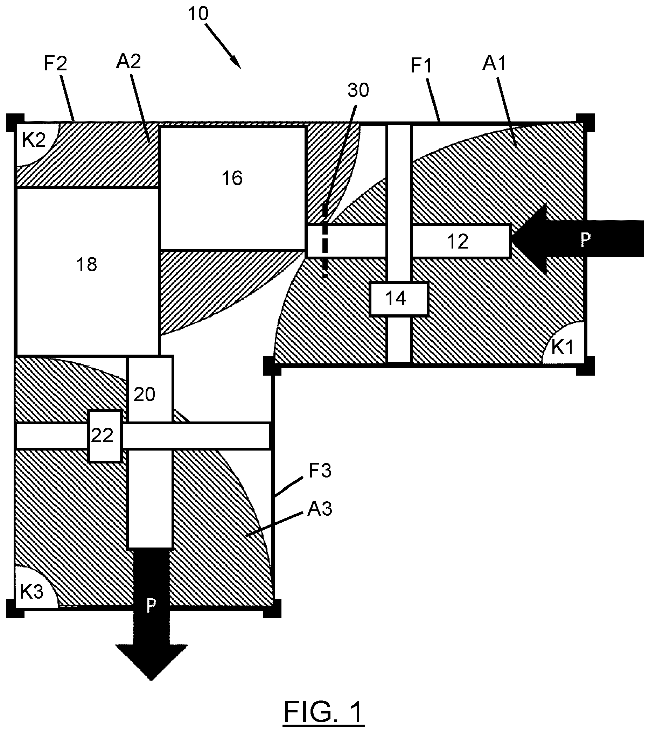

In Figur 1 ist eine erfindungsgemäße Produktionsanlage allgemein mit dem Bezugszeichen 10 bezeichnet. Die Produktionsanlage 10 umfasst eine erste Funktionseinheit F1, eine zweite Funktionseinheit F2 und eine dritte Funktionseinheit F3. Die erste Funktionseinheit F1 weist in einer Arbeitszone A1 angeordnete Arbeitselemente 12 und 14 auf. Der ersten Funktionseinheit F1 ist eine Kamera K1 zugeordnet, welche die Arbeitszone A1 bzw. die Elemente 12 und 14 wenigstens zum größten Teil erfassen und entsprechende Bilddaten erzeugen kann.

Um die von einer Kamera erzeugten Bilddaten auf produktionswesentliche Aspekte konzentrieren bzw. fokussieren zu können, können Abschnitte der entsprechenden Arbeitszone(n) und/oder der in dieser Funktionseinheit angeordneten Elemente außerhalb des Erfassungsbereichs der Kamera verbleiben, wie beispielsweise Halterungen der Elemente, verlagerbare Elemente in ihren Parkpositionen und dergleichen.

In einer zu der ersten Funktionseinheit F1 analogen Weise weist die zweite Funktionseinheit F2 eine Arbeitszone A2, darin angeordnete Elemente 16 und 18 sowie eine Kamera K2 und die dritte Funktionseinheit F3 eine Arbeitszone A2, darin angeordnete Elemente 20 und 22 und eine Kamera K3 auf.

In einer möglichen Ausführungsform der in Figur 1 schematisch dargestellten Produktionsanlage 10 ist das Element 12 dazu eingerichtet, aus flachen Karton-Zuschnitten, welche entlang des in Figur 1 oben rechts dargestellten Pfeils P in die Produktionsanlage 10 eintreten, Verpackungen zu erzeugen, wobei das in derselben Arbeitszone A1 angeordnete Element 14 ein Portal-Faltkopf sein kann, um die Verpackungen in ihre gewünschte Form zu bringen. In Element 16 wird anschließend eine Gruppierung durchgeführt, wobei die Kartonagen anschließend über das Element 18 aus der Arbeitszone A2 in die Arbeitszone A3 übergeben werden. Über das Element 20 werden die fertigen Produktionsgüter, welche über die Produktionsanlage 10 abgefertigt worden sind, gemäß dem in Figur 1 links unten dargestellten Pfeil P aus der Produktionsanlage 10 abtransportiert, wobei die Produktionsgüter bei ihrem Abtransport über das Element 20 durch das Element 22, welches hier als Portal-Drehkopf ausgebildet ist, rotiert werden können.

Ferner ist in Figur 1 zu erkennen, dass die Kamera K2 nicht auf einen auf die zweite Funktionseinheit F2 begrenzten Sichtbereich beschränkt ist, sondern einen Erfassungsbereich aufweist, welcher sich in die benachbarte erste Funktionseinheit F1 hinein erstreckt.

Natürlich könnten die Erfassungsbereiche von wenigstens zwei Kameras auch überlappend ausgebildet sein, so dass zu Abschnitten der Produktionsanlage 10, welche in derartigen Überlappungsbereichen angeordnet sind, Bilddaten von unterschiedlichen Kameras bereitgestellt werden können.

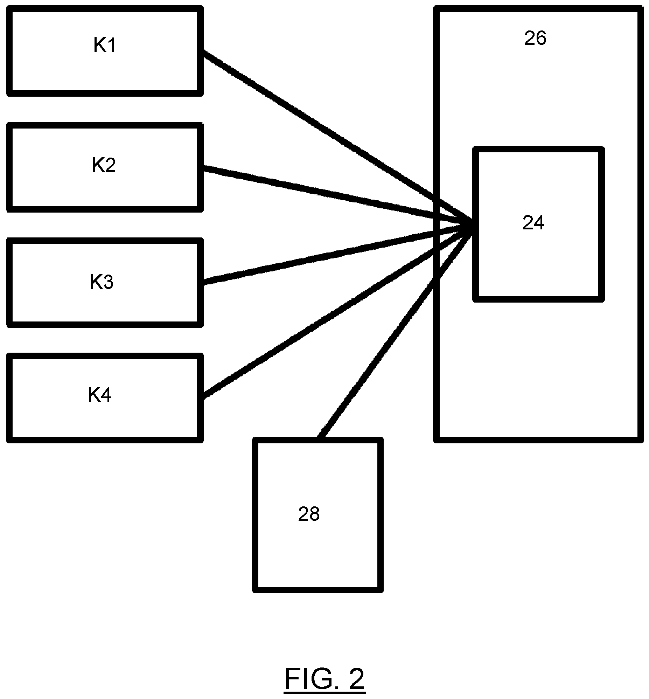

In Figur 2 ist eine beispielhafte kommunikative Verbindung gezeigt. Die in Figur 2 links dargestellten Kameras K1-K4 sind jeweils mit einem Switch 24 verbunden, welcher hier in einem Schaltschrank 26 angeordnet ist. Ferner ist mit dem Switch 24 ein Touchscreen 28 verbunden. Der Touchscreen 28 ist in kommunikativer Verbindung mit einer Software, welche dazu eingerichtet ist, das erfindungsgemäße Verfahren auszuführen, und mit einer Visualisierung-Software, welche dazu eingerichtet ist, entsprechende Bilddaten der Kameras K1-K4 an dem Touchscreen 28 anzuzeigen. Der Switch 24 steht des Weiteren in kommunikativer Verbindung mit einer allgemeinen Steuerung-Software der Produktionsanlage 10, so dass beispielsweise über den Touchscreen 28 auf die Steuerung der Produktionsanlage 10 zugegriffen werden kann.

Hier kann der Touchscreen 28 z.B. in Kombination mit dem Switch 24 und der Steuerung-Software der Produktionsanlage 10 zugleich auch als Steuereinheit gemäß der vorliegenden Erfindung fungieren. Alternativ kann eine zusätzliche Steuereinheit vorgesehen sein, welche dazu eingerichtet ist, ein Signal wenigstens einer Fehlererfassungseinheit (s. weiter unten) zu erfassen, welche einem jeweiligen der Elemente 12-22 zugeordnet ist, und darauf basierend zu detektieren, ob ein Fehler in der Produktionsanlage 10 aufgetreten ist. Die Steuereinheit kann ebenfalls mit dem Switch 24 verbunden sein.

Beispielhaft ist in Figur 1 am Element 22 eine Fehlererfassungseinheit 30 schematisch dargestellt, welche hier als Lichtschranke ausgebildet ist und dazu eingerichtet ist, zu erfassen, ob Produktionsgüter mit vorbestimmten Abmessungen die Lichtschranke passieren oder nicht. Sollte die Erfassung der Lichtschranke von vorbestimmten Erwartungen abweichen, so wird ein Fehlersignal an die oben erwähnte Steuereinheit ausgegeben und das erfindungsgemäße Verfahren ausgeführt.

## Patentansprüche

1. Verfahren zur automatisierten Fehlerhandhabung einer Produktionsanlage (10), umfassend die folgenden Schritte:
- Bereitstellen einer Mehrzahl von Bilderfassungseinheiten (K1, K2, K3, K4) und einer Mehrzahl von Fehlererfassungseinheiten (30) an einer Produktionsanlage (10), wobei die Produktionsanlage (10) eine Mehrzahl von Arbeitszonen (A1, A2, A3) umfasst, welchen jeweils wenigstens eine der Bilderfassungseinheiten (K1, K2, K3, K4) und wenigstens eine der Fehlererfassungseinheiten (30) zugeordnet ist,
- Bereitstellen einer Steuereinheit, welche dazu eingerichtet ist, ein Signal wenigstens einer Fehlererfassungseinheit (30) zu erfassen und darauf basierend zu detektieren, ob in der Arbeitszone (A1, A2, A3), welcher die Fehlererfassungseinheit (30) zugeordnet ist, ein Fehler in der Produktionsanlage (10) aufgetreten ist, und
- in dem Fall, dass in einer Arbeitszone (A1, A2, A3) ein Fehler detektiert worden ist, Weiterleiten von Bilddaten, welche von der wenigstens einen Bilderfassungseinheit (K1, K2, K3, K4) dieser Arbeitszone (A1, A2, A3) erfasst werden und/oder worden sind, an einen Benutzer unter Verwendung einer Ausgabeeinheit (28).

2. Verfahren nach Anspruch 1,
**dadurch gekennzeichnet, dass** die Bilddaten einer jeweiligen Bilderfassungseinheit (K1, K2, K3, K4) in einem Ringspeicher gespeichert werden, wobei Bilddaten, nach Ablauf einer vorbestimmten Zeitperiode, durch neue Bilddaten überschrieben werden.

3. Verfahren nach Anspruch 2,
**dadurch gekennzeichnet, dass** die vorbestimmte Zeitperiode höchstens 1 Stunde, insbesondere höchstens 15 Minuten, vorteilhafterweise in etwa 5 Minuten, beträgt.

4. Verfahren nach Anspruch 2 oder 3,
**dadurch gekennzeichnet, dass** die Bilddaten, welche im Fehlerfall automatisiert über die Ausgabeeinheit (28) an den Benutzer bereitgestellt werden, Bilddaten umfassen, welche um bis zu der Höhe der vorbestimmten Zeitperiode vor dem Zeitpunkt aufgenommen worden sind, zu welchem der Fehler in der Arbeitszone (A1, A2, A3) detektiert worden ist.

5. Verfahren nach Anspruch 4,
**dadurch gekennzeichnet, dass** die Bilddaten, welche im Fehlerfall automatisiert über die Ausgabeeinheit (28) an den Benutzer bereitgestellt werden, Bilddaten umfassen, welche 0,3 min bis 1,5 min, insbesondere 0,5 min, vor dem Zeitpunkt aufgenommen worden sind, zu welchem der Fehler in der Arbeitszone (A1, A2, A3) detektiert worden ist, wobei, auf eine Eingabe eines Benutzers hin, Bilddaten an die Ausgabeeinheit (28) bereitgestellt werden, welche um mehr als 0,3 min bis 1,5 min, insbesondere um mehr als 0,5 min, vor dem Zeitpunkt aufgenommen worden sind, zu welchem der Fehler in der Arbeitszone (A1, A2, A3) detektiert worden ist.

6. Verfahren nach einem der vorhergehenden Ansprüche,
**dadurch gekennzeichnet, dass** zusammen mit den Bilddaten, welche über die Ausgabeeinheit (28) an den Benutzer bereitgestellt werden, auch eine Identifikation der Arbeitszone (A1, A2, A3) bereitgestellt wird, in welcher der Fehler aufgetreten ist.

7. Verfahren nach einem der vorhergehenden Ansprüche,
**dadurch gekennzeichnet, dass** jeder Bilderfassungseinheit (K1, K2, K3, K4) und jeder Arbeitszone (A1, A2, A3) eine eineindeutige Kennung zugewiesen wird und dass die Kennung der Arbeitszone (A1, A2, A3), in welcher der Fehler aufgetreten ist, und die Kennung jeder dieser Arbeitszone (A1, A2, A3) zugeordneten Bilderfassungseinheit (K1, K2, K3, K4) an den Benutzer über die Ausgabeeinheit (28) bereitgestellt werden.

8. Verfahren nach einem der vorhergehenden Ansprüche,
**dadurch gekennzeichnet, dass** die Bilddaten, welche im Fehlerfall über die Ausgabeeinheit (28) an den Benutzer bereitgestellt werden, automatisiert in eine Speichereinheit übermittelt werden, aus welcher die Bilddaten dauerhaft abrufbar sind.

9. Verfahren nach einem der vorhergehenden Ansprüche,
**dadurch gekennzeichnet, dass** der Steuereinheit eine Datenbank zugeordnet ist, in welcher vordefinierte Fehlertexte gespeichert sind, wobei die vordefinierten Fehlertexte wenigstens einem Fehlertyp, insbesondere einer Kombination aus Fehlererfassungseinheit (30) und Arbeitszone (A1, A2, A3), zugeordnet sind.

10. Produktionsanlage (10), welche dazu eingerichtet ist, Fehler automatisiert, insbesondere unter Verwendung des Verfahrens nach einem der vorhergehenden Ansprüche, zu handhaben, umfassend
- eine Mehrzahl von Bilderfassungseinheiten (K1, K2, K3, K4) und eine Mehrzahl von Fehlererfassungseinheiten (30), wobei die Produktionsanlage (10) eine Mehrzahl von Arbeitszonen (A1, A2, A3) umfasst, welchen jeweils wenigstens eine der Bilderfassungseinheiten (K1, K2, K3, K4) und wenigstens eine der Fehlererfassungseinheiten (30) zugeordnet ist,
- eine Steuereinheit, welche dazu eingerichtet ist, ein Signal wenigstens einer Fehlererfassungseinheit (30) zu erfassen und darauf basierend zu detektieren, ob in der Arbeitszone (A1, A2, A3), welcher die Fehlererfassungseinheit (30) zugeordnet ist, ein Fehler in der Produktionsanlage (10) aufgetreten ist, und
- wobei die Steuereinheit ferner dazu eingerichtet ist, in dem Fall, dass in einer Arbeitszone (A1, A2, A3) ein Fehler detektiert worden ist, Bilddaten, welche von der wenigstens einen Bilderfassungseinheit (K1, K2, K3, K4) dieser Arbeitszone (A1, A2, A3) erfasst werden und/oder worden sind, an einen Benutzer unter Verwendung einer Ausgabeeinheit (28) weiterzuleiten.

11. Produktionsanlage (10) nach Anspruch 10,
**dadurch gekennzeichnet, dass** die Ausgabeeinheit (28) an der Produktionsanlage (10) bereitgestellt ist.

12. Produktionsanlage (10) nach Anspruch 10 oder 11,
**dadurch gekennzeichnet, dass** die Ausgabeeinheit (28) ferner dazu eingerichtet ist, Benutzereingaben zu empfangen, wobei insbesondere die Ausgabeeinheit (28) als Touch-Screen ausgebildet ist.

13. Produktionsanlage (10) nach einem der Ansprüche 10 bis 12,
**dadurch gekennzeichnet, dass** die Produktionsanlage (10) Funktionseinheiten (F1, F2, F3) umfasst, welche miteinander mechanisch und/oder elektrisch verbindbar sind, wobei jede Funktionseinheit (F1, F2, F3) genau eine Arbeitszone (A1, A2, A3) aufweist.

14. Produktionsanlage (10) nach Anspruch 13,
**dadurch gekennzeichnet, dass** jede Funktionseinheit (F1, F2, F3) mit einer eineindeutigen Kennung versehen ist, wobei die Kennung derjenigen Funktionseinheit (F1, F2, F3), in welcher ein Fehler detektiert worden ist, zusammen mit den Bilddaten an den Benutzer über die Ausgabeeinheit (28) ausgegeben wird.

15. Produktionsanlage (10) nach einem der Ansprüche 10 bis 13,
**dadurch gekennzeichnet, dass** die Fehlererfassungseinheit (30) wenigstens eines aus einer Lichtschranke, einem Drucksensor, einer Stromerfassungseinheit und einer Magnetfeldeinheit umfasst.
